# EUROPÄISCHE PATENTSCHRIFT

(11) **EP 3 597 073 B1**
(45) Veröffentlichungstag und Bekanntmachung des Hinweises auf die Patenterteilung: **08.09.2021**
(21) Anmeldenummer: 19186293.7
(22) Anmeldetag: 15.07.2019
(51) Int. Cl.: A47B 3/12, A47B 13/00, B60N 3/00, B64D 11/06

(54) **STOSS-RESILIENT GELAGERTE TISCH-VORRICHTUNG**
TABLE DEVICE MOUNTED RESILIENT TO IMPACTS
DISPOSITIF TABLE MONTÉ RÉSISTANT AUX CHOCS

(30) Priorität: 18.07.2018 DE 102018117399
(43) Veröffentlichungstag der Anmeldung: 22.01.2020
(73) Patentinhaber: GETA Gesellschaft für Entwicklung, Technik - Anwendung für Holz- und Kunststofferzeugnisse mbH, 88239 Wangen (DE)
(72) Erfinder: Mühlebach, Eugen, 88099 Neukirch (DE)
(74) Vertreter: Kiessling, Christian

(56) Entgegenhaltungen:
- EP-A1- 3 081 112
- WO-A1-00/21414
- US-A- 5 174 225
- US-A1- 2013 220 188

## Beschreibung

Die Erfindung betrifft eine Tisch-Vorrichtung mit einer Tischplatte, die zum Zweck einer Halterung mit einer Stützstrebe gekoppelt ist. Die Stützstrebe kann dabei direkt an einer Wand oder indirekt an einer Standoberfläche abgestützt sein.

Tisch-Vorrichtungen der eingangs genannten Art werden im Stand der Technik als Ablageeinrichtungen für Gegenstände unterschiedlichster Art verwendet. Die bekannten Tisch-Vorrichtungen weisen indes den Nachteil auf, dass sie bei Anbringung in einem Waggon eines Zuges oder innerhalb eines Reisebusses aufgrund einer festen Verbindung mit der Innenauskleidung des Waggons oder Reisebusses bei einer abrupten Beschleunigung wie insbesondere einem plötzlichen Bremsvorgang eines betreffenden Fahrzeuges eine Stoßkante für eine an diesem Tisch sitzende Person darstellen und je nach Heftigkeit einer als Stoß wirkenden ruckartigen Beschleunigung eine u. U. deutliche Verletzungsgefahr für die betreffende Person darstellen. Eine derartige Tisch-Vorrichtung ist beispielsweise aus der US 5 174 225 A bekannt.

Aufgabe der Erfindung ist es deshalb, eine Tisch-Vorrichtung zur Anbringung im Inneren eines bewegbaren Interieurs wie beispielsweise eines Waggons eines Zuges, eines Schiffes oder eines Reisebusses zu schaffen, bei der eine Verletzungsgefahr einer in der Nachbarschaft befindlichen Person bei einer ruckartigen Beschleunigung insbesondere in Fahrtrichtung gegenüber den bekannten Tisch-Vorrichtungen deutlich gemindert ist.

Für eine Tisch-Vorrichtung der eingangs genannten Art wird diese Aufgabe erfindungsgemäß dadurch gelöst, dass die Tischplatte an einer mit mechanischen Dämpfungs-Elementen versehenen Trägerplattform befestigt ist und über die mechanischen Dämpfungs-Elemente indirekt mit der Stützstrebe verbunden ist.

Bevorzugte Ausführungsformen der Erfindung sind Gegenstand der Unteransprüche, deren Elemente im Sinne einer weiteren Verbesserung des Lösungsansatzes der der Erfindung zugrunde gelegten Aufgabe wirken.

Bei der erfindungsgemäßen Tisch-Vorrichtung wird mit Hilfe der Merkmalskombination, dass die Tischplatte an einer mit mechanischen Dämpfungs-Elementen versehenen Trägerplattform befestigt ist und über die mechanischen Dämpfungs-Elemente indirekt mit der Stützstrebe verbunden ist, im Falle einer plötzlichen Beschleunigung einer in der Nachbarschaft der Tisch-Vorrichtung befindlichen Person in Relation zur Tisch-Vorrichtung eine Dämpfung eines Aufpralls der Person gegen eine Kante der betreffenden Tischplatte erreicht, wodurch eine deutliche Minderung einer Verletzungsgefahr gegenüber den starr suspendierten Tischplatten des Standes der Technik zu verzeichnen ist.

Erfindungsgemäß ist vorgesehen, dass die Stützstrebe, die Trägerplattform sowie die Tischplatte horizontal ausgerichtet sind.

Erfindungsgemäß sind die Dämpfungs-Elemente horizontal orientiert an einer Trägerplattform ausgerichtet, um bei einer zu erwartenden Beschleunigung in horizontaler Richtung eine maximale Wirksamkeit zu erbringen.

Um nicht störend zu wirken und keine Verletzungsgefahr darzustellen und zum Schutz vor ungewollten mechanischen Einwirkungen von außen sind die Dämpfungs-Elemente erfindungsgemäß innerhalb betreffender Aussparungen in eine Trägerplattform integriert.

Erfindungsgemäß ist die Tischplatte der Tisch-Vorrichtung rechteckförmig ausgebildet und mit zwei zueinander parallel ausgerichteten Hauptseitenkanten und zwei kürzer als die Hauptseitenkanten ausgebildeten, zueinander parallel ausgerichteten Nebenseitenkanten versehen, wobei die Dämpfungs-Elemente rechtwinklig zu den Hauptseitenkanten der Tischplatte ausgerichtet sind.

Um eine gleichförmige unidirektionale Dämpfung zu bewirken sind dabei erfindungsgemäß jeweils zwei Dämpfungs-Elemente für eine Dämpfung eines Stoßes auf eine erste der beiden Hauptseitenkanten vorgesehen und jeweils zwei Dämpfungs-Elemente für eine Dämpfung eines Stoßes auf eine zweite der beiden Hauptseitenkanten vorgesehen.

Erfindungsgemäß ist dabei ein erstes Dämpfungs-Element der beiden Dämpfungs-Elemente für eine Dämpfung eines Stoßes auf die erste Hauptseitenkante im Bereich einer ersten Nebenseitenkante der Tischplatte angeordnet, und ein zweites Dämpfungs-Element der beiden Dämpfungs-Elemente für eine Dämpfung eines Stoßes auf die erste Hauptseitenkante ist im Bereich einer zweiten Nebenseitenkante der Tischplatte angeordnet.

Dementsprechend ist ein erstes Dämpfungs-Element der beiden Dämpfungs-Elemente für eine Dämpfung eines Stoßes auf die zweite Hauptseitenkante erfindungsgemäß im Bereich einer ersten Nebenseitenkante der Tischplatte angeordnet, und ein zweites Dämpfungs-Element der beiden Dämpfungs-Elemente für eine Dämpfung eines Stoßes auf die zweite Hauptseitenkante ist vorzugsweise im Bereich einer zweiten Nebenseitenkante der Tischplatte angeordnet.

Die Beschaffenheit eines Dämpfungselementes ist je nach Masse einer Tischplatte und der Härte eines zu erwartenden Stoßes einer Person gegen die Tischplatte zu wählen. So kann ein Dämpfungs-Element beispielsweise aus einem elastischen Kunststoffmaterial hergestellt sein, wobei das Dämpfungs-Element dann vorzugsweise langschmal ausgebildet ist und formschlüssig in einer langschmalen Höhlung der Trägerplattform gelagert ist.

Erfindungsgemäß ist ein Dämpfungs-Element von einem in linearer Richtung onduliert ausgebildeten plastisch stauchbaren Dämpfungskörper gebildet ist, der formschlüssig in eine langschmale Höhlung der Trägerplattform eingebracht ist. Erfindungsgemäß erfolgt dabei eine plastische Verformung bei einem Stauchvorgang des Dämpfungskörpers erst ab einer vorgegeben definierten Stärke eines auf eine Kante der Tischplatte wirkenden Impulses.

Generell kann ein Dämpfungs-Element von einer Spiralfeder, einer Gasfeder oder einer hydraulischen Feder gebildet sein, die formschlüssig in eine langschmale Höhlung der Trägerplattform eingebracht ist.

Die erfindungsgemäße Tisch-Vorrichtung wird im Folgenden anhand einer bevorzugten Ausführungsform erläutert, die in den Figuren der Zeichnungen dargestellt sind. Darin zeigen:
- Fig. 1: eine bevorzugte Ausführungsform der Lagerungselemente einer erfindungsgemäßen TischVorrichtung in einer Explosionsansicht von schräg unten;
- Fig. 2: in Fig. 1 dargestellte bevorzugte Ausführungsform der zusammengesetzten Lagerungselemente einer erfindungsgemäßen Tisch-Vorrichtung in einer Ansicht von schräg unten;
- Fig. 3: in Fig. 1 dargestellte bevorzugte Ausführungsform der zusammengesetzten Lagerungselemente einer erfindungsgemäßen Tisch-Vorrichtung in einer Ansicht von unten.

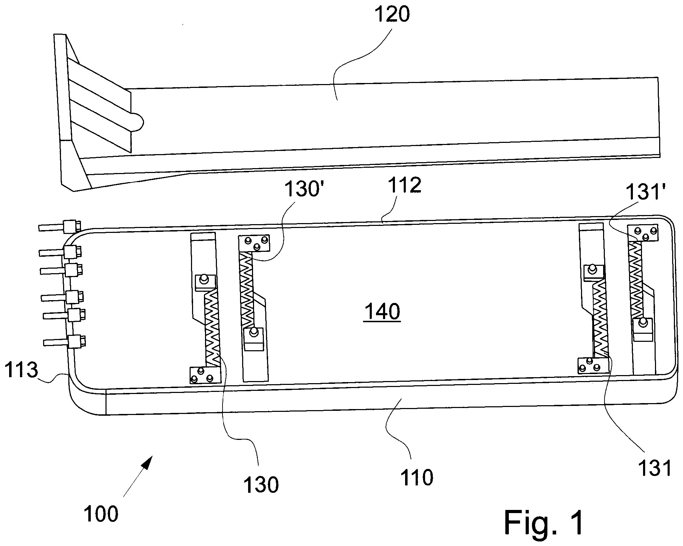

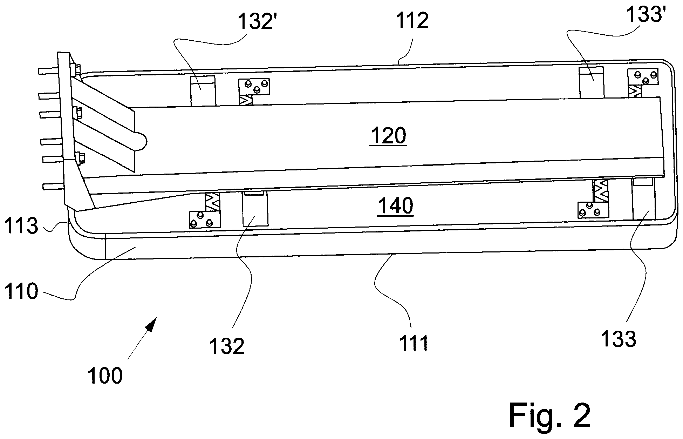

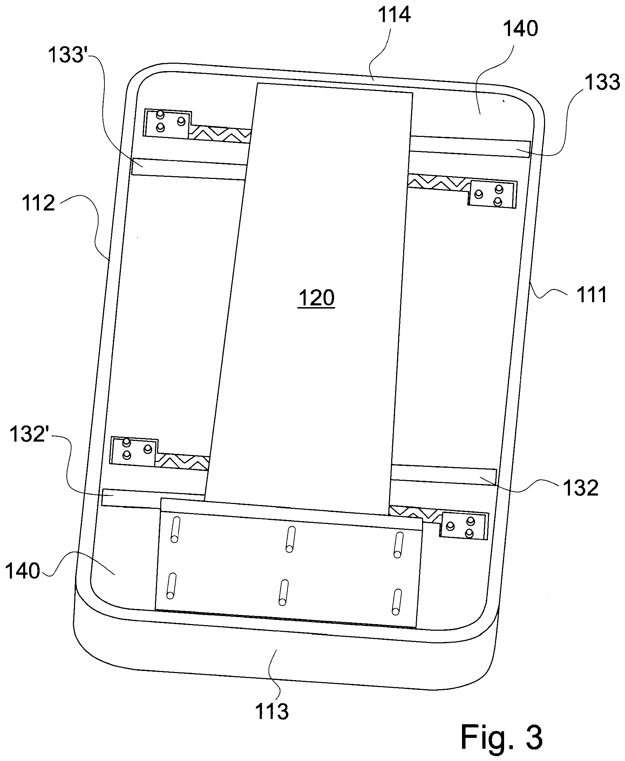

Die in den Figuren 1 bis 3 dargestellte erfindungsgemäße Tisch-Vorrichtung 100 enthält eine Tischplatte 110, die zum Zweck einer Befestigung mit der Innenverkleidung eines Waggons eines Zuges mit einer Stützstrebe 120 gekoppelt ist, deren freies Ende an einer Wand eines Waggons fest anbringbar ist. Die Tischplatte 110 ist dabei an einer mit mechanischen Dämpfungs-Elementen 130, 131; 130', 131' versehenen Trägerplattform 140 angebracht und über die mechanischen Dämpfungs-Elemente 130, 131; 130', 131' indirekt mit der Stützstrebe 120 verbunden. Die Stützstrebe 120, die Trägerplattform 140 sowie die Tischplatte 110 sind in herkömmlicher Weise horizontal ausgerichtet.

Die Dämpfungs-Elemente 130, 131; 130', 131' sind horizontal orientiert an einer Trägerplattform 140 angebracht und dabei innerhalb einer jeweiligen Aussparung 132, 133, 132', 133' in die Trägerplattform 140 integriert.

Die Tischplatte 110 ist rechteckförmig ausgebildet und enthält zwei zueinander parallel ausgerichtete Hauptseitenkanten 111, 112 und zwei kürzer als die Hauptseitenkanten 111, 112 ausgebildete, zueinander parallel ausgerichtete Nebenseitenkanten 113, 114, wobei die Dämpfungs-Elemente 130, 131; 130', 131' rechtwinklig zu den Hauptseitenkanten 111, 112 der Tischplatte 110 ausgerichtet sind.

Jeweils zwei Dämpfungs-Elemente 130', 131' sind für eine Dämpfung eines Stoßes einer in der Nachbarschaft der Tisch-Vorrichtung 100 befindlichen Person auf eine erste der beiden Hauptseitenkanten 111, 112 vorgesehen und jeweils zwei Dämpfungs-Elemente 130, 131 sind für eine Dämpfung eines Stoßes einer in der Nachbarschaft der Tisch-Vorrichtung 100 befindlichen Person auf eine zweite der beiden Hauptseitenkanten 111, 112 vorgesehen.

Ein erstes Dämpfungs-Element 130' der beiden Dämpfungs-Elemente 130', 131' für eine Dämpfung eines Stoßes auf die erste Hauptseitenkante 111 ist im Bereich einer ersten Nebenseitenkante 113 der Tischplatte 110 angeordnet und ein zweites Dämpfungs-Element 131' der beiden Dämpfungs-Elemente 130', 131' für eine Dämpfung eines Stoßes auf die erste Hauptseitenkante 111 ist im Bereich einer zweiten Nebenseitenkante 114 der Tischplatte 110 angeordnet.

Ein erstes Dämpfungs-Element 130 der beiden Dämpfungs-Elemente 130, 131 für eine Dämpfung eines Stoßes auf die zweite Hauptseitenkante 112 ist im Bereich einer ersten Nebenseitenkante 113 der Tischplatte 110 angeordnet und ein zweites Dämpfungs-Element 131 der beiden Dämpfungs-Elemente 130, 131 für eine Dämpfung eines Stoßes auf die zweite Hauptseitenkante 112 ist im Bereich einer zweiten Nebenseitenkante 114 der Tischplatte 110 angeordnet.

Jedes Dämpfungs-Element 130, 131; 130', 131' ist von einem in linearer Richtung onduliert ausgebildeten elastisch stauchbaren Dämpfungskörper gebildet, der formschlüssig in eine langschmale Höhlung 132, 133; 132', 133' der Trägerplattform 140 eingebracht ist.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.
- 110: Tisch-Vorrichtung
- 110: Tischplatte
- 111, 112: Hauptseitenkante
- 113, 114: Nebenseitenkante
- 120: Stützstrebe
- 130, 131, 130', 131': Dämpfungs-Elemente
- 132, 133, 132', 133': Aussparungen
- 140: Trägerplattform

**Bezugszeichenliste**

## Patentansprüche

1. Tisch-Vorrichtung (100) mit einer Tischplatte (110), die zum Zweck einer Halterung mit einer Stützstrebe (120) gekoppelt ist, wobei die Tischplatte (110) an einer mit mechanischen Dämpfungs-Elementen (130, 131; 130', 131') versehenen Trägerplattform (140) befestigt ist und über die mechanischen Dämpfungs-Elemente (130, 131; 130', 131') indirekt mit der Stützstrebe (120) verbunden ist, die Stützstrebe (120), die Trägerplattform (140) sowie die Tischplatte (110) horizontal ausgerichtet sind und die Dämpfungs-Elemente (130, 131; 130', 131') horizontal orientiert an einer Trägerplattform (140) ausgerichtet sind, wobei die Dämpfungs-Elemente (130, 131; 130', 131') innerhalb betreffender Aussparungen (132, 133; 132', 133') in eine Trägerplattform (140) integriert sind und wobei die Tischplatte (110) rechteckförmig ausgebildet ist und zwei zueinander parallel ausgerichtete Hauptseitenkanten (111, 112) und zwei kürzer als die Hauptseitenkanten (111, 112) ausgebildete, zueinander parallel ausgerichtete Nebenseitenkanten (113, 114) enthält, wobei die Dämpfungs-Elemente (130, 131; 130', 131') rechtwinklig zu den Hauptseitenkanten (111, 112) der Tischplatte (110) ausgerichtet sind, wobei
- jeweils zwei Dämpfungs-Elemente (130', 131') für eine Dämpfung eines Stoßes auf eine erste (111) der beiden Hauptseitenkanten (111, 112) vorgesehen sind und jeweils zwei Dämpfungs-Elemente (130, 131) für eine Dämpfung eines Stoßes auf eine zweite (112) der beiden Hauptseitenkanten (111, 112) vorgesehen sind, wobei
- ein erstes Dämpfungs-Element (130') der beiden Dämpfungs-Elemente (130', 131') für eine Dämpfung eines Stoßes auf die erste Hauptseitenkante (111) im Bereich einer ersten Nebenseitenkante (113) der Tischplatte (110) angeordnet ist und ein zweites Dämpfungs-Element (131') der beiden Dämpfungs-Elemente (130', 131') für eine Dämpfung eines Stoßes auf die erste Hauptseitenkante (111) im Bereich einer zweiten Nebenseitenkante (114) der Tischplatte (110) angeordnet ist, und
- ein erstes Dämpfungs-Element (130) der beiden Dämpfungs-Elemente (130, 131) für eine Dämpfung eines Stoßes auf die zweite Hauptseitenkante (112) im Bereich einer ersten Nebenseitenkante (113) der Tischplatte (110) angeordnet ist und ein zweites Dämpfungs-Element (131) der beiden Dämpfungs-Elemente (130, 131) für eine Dämpfung eines Stoßes auf die zweite Hauptseitenkante (112) im Bereich einer zweiten Nebenseitenkante (114) der Tischplatte (110) angeordnet ist, und wobei
- ein Dämpfungs-Element (130, 131; 130', 131') von einem in linearer Richtung onduliert ausgebildeten plastisch stauchbaren Dämpfungskörper gebildet ist, der formschlüssig in eine langschmale Höhlung (132, 133; 132', 133') der Trägerplattform (140) eingebracht ist, wobei
- eine plastische Verformung bei einem Stauchvorgang eines Dämpfungskörpers (130, 131; 130', 131') erst ab einer vorgegeben definierten Stärke eines auf eine Kante der Tischplatte (110) wirkenden Impulses erfolgt.

2. Tisch-Vorrichtung (100) nach Anspruch 1, **dadurch gekennzeichnet, dass** ein Dämpfungs-Element (130, 131; 130', 131') aus einem elastischen Kunststoffmaterial hergestellt ist.

3. Tisch-Vorrichtung (100) nach einem der vorhergehenden Ansprüche, **dadurch gekennzeichnet, dass** ein Dämpfungs-Element (130, 131; 130', 131') langschmal ausgebildet ist und formschlüssig in einer langschmalen Höhlung (132, 133; 132', 133') der Trägerplattform (140) gelagert ist.

4. Tisch-Vorrichtung (100) nach einem der Ansprüche 1 bis 3, **dadurch gekennzeichnet, dass** ein Dämpfungs-Element (130, 131; 130', 131') von einer Gasfeder gebildet ist, die formschlüssig in eine langschmale Höhlung (132, 133; 132', 133') der Trägerplattform (140) eingebracht ist.

5. Tisch-Vorrichtung (100) nach einem der Ansprüche 1 bis 3, **dadurch gekennzeichnet, dass** ein Dämpfungs-Element (130, 131; 130', 131') von einer hydraulischen Feder gebildet ist, die formschlüssig in eine langschmale Höhlung (132, 133; 132' 133') der Trägerplattform (140) eingebracht ist.

## Claims

1. Table device (100) with a table top (110), which is coupled to a support strut (120) for the purpose of mounting, wherein the table top (110) is fastened to a carrier platform (140) provided with mechanical damping elements (130, 131; 130', 131') and is connected indirectly to the support strut (120) via the mechanical damping elements (130, 131; 130', 131'); the support strut (120), the carrier platform (140) and the table top (110) are aligned horizontally and the damping elements (130, 131; 130', 131') are aligned in a horizontal orientation on a carrier platform (140), wherein the damping elements (130, 131; 130', 131') are integrated into a carrier platform (140) inside respective cutouts (132, 133; 132', 133') and wherein the table top (110) has a rectangular form and includes two main side edges (111, 112), which are aligned parallel to one another, and two secondary side edges (113, 114), which have a shorter form than the main side edges (111, 112) and are aligned parallel to one another, wherein the damping elements (130, 131; 130', 131') are aligned at a right angle to the main side edges (111, 112) of the table top (110), wherein
- two respective damping elements (130', 131') for damping an impact against a first one (111) of the two main side edges (111, 112) are provided and two respective damping elements (130, 131) for damping an impact against a second one (112) of the two main side edges (111, 112) are provided, wherein
- a first damping element (130') of the two damping elements (130', 131') for damping an impact against the first main side edge (111) is arranged in the region of a first secondary side edge (113) of the table top (110), and a second damping element (131') of the two damping elements (130', 131') for damping an impact against the first main side edge (111) is arranged in the region of a second secondary side edge (114) of the table top (110), and
- a first damping element (130) of the two damping elements (130, 131) for damping an impact against the second main side edge (112) is arranged in the region of a first secondary side edge (113) of the table top (110), and a second damping element (131) of the two damping elements (130, 131) for damping an impact against the second main side edge (112) is arranged in the region of a second secondary side edge (114) of the table top (110), and wherein
- a damping element (130, 131; 130', 131') is formed by a plastically compressible damping body which has an undulating form in the linear direction and is introduced in a form-fitting manner in a long and narrow cavity (132, 133; 132', 133') of the carrier platform (140), wherein
- a plastic deformation during a compression operation of a damping body (130, 131; 130', 131') takes place only above a prescribed defined strength of an impulse which acts on an edge of the table top (110).

2. Table device (100) according to Claim 1, **characterized in that** a damping element (130, 131; 130', 131') is produced from an elastic plastics material.

3. Table device (100) according to either of the preceding claims, **characterized in that** a damping element (130, 131, 130', 131') has a long and narrow form and is mounted in a form-fitting manner in a long and narrow cavity (132, 133; 132', 133') of the carrier platform (140).

4. Table device (100) according to one of Claims 1 to 3, **characterized in that** a damping element (130, 131; 130', 131') is formed by a gas spring, which is introduced in a form-fitting manner in a long and narrow cavity (132, 133; 132', 133') of the carrier platform (140).

5. Table device (100) according to one of Claims 1 to 3, **characterized in that** a damping element (130, 131; 130', 131') is formed by a hydraulic spring, which is introduced in a form-fitting manner in a long and narrow cavity (132, 133; 132', 133') of the carrier platform (140).

## Revendications

1. Dispositif table (100) pourvu d'un plateau de table (110), qui est couplé à une entretoise d'appui (120) dans le but de le soutenir, le plateau de table (110) étant fixé à une plateforme de support (140) munie d'éléments d'amortissement mécaniques (130, 131 ; 130', 131') et étant relié indirectement à l'entretoise d'appui (120) par l'intermédiaire des éléments d'amortissement mécaniques (130, 131 ; 130', 131'), l'entretoise d'appui (120), la plateforme de support (140) et le plateau de table (110) étant dirigés horizontalement et les éléments d'amortissement (130, 131 ; 130', 131') étant orientés horizontalement sur une plateforme de support (140), les éléments d'amortissement (130, 131 ; 130', 131') étant intégrés à l'intérieur d'évidements correspondants (132, 133 ; 132', 133') dans une plateforme de support (140) et le plateau de table (110) étant configuré sous forme rectangulaire et contenant deux bords latéraux principaux (111, 112) dirigés parallèlement l'un à l'autre et deux bords latéraux secondaires (113, 114) configurés plus courts que les bords latéraux principaux (111, 112), dirigés parallèlement l'un à l'autre,
les éléments d'amortissement (130, 131 ; 130', 131') étant dirigés à angle droit des bords latéraux principaux (111, 112) du plateau de table (110),
- à chaque fois deux éléments d'amortissement (130', 131') étant prévus pour un amortissement d'un choc sur un premier (111) des deux bords latéraux principaux (111, 112) et à chaque fois deux éléments d'amortissement (130, 131) étant prévus pour un amortissement d'un choc sur un deuxième (112) des deux bords latéraux principaux (111, 112),
- un premier élément d'amortissement (130') des deux éléments d'amortissement (130', 131') étant agencé pour un amortissement d'un choc sur le premier bord latéral principal (111) dans la zone d'un premier bord latéral secondaire (113) du plateau de table (110) et un deuxième élément d'amortissement (131') des deux éléments d'amortissement (130', 131') étant agencé pour un amortissement d'un choc sur le premier bord latéral principal (111) dans la zone d'un deuxième bord latéral secondaire (114) du plateau de table (110), et
- un premier élément d'amortissement (130) des deux éléments d'amortissement (130, 131) étant agencé pour un amortissement d'un choc sur le deuxième bord latéral principal (112) dans la zone d'un premier bord latéral secondaire (113) du plateau de table (110), et un deuxième élément d'amortissement (131) des deux éléments d'amortissement (130, 131) étant agencé pour un amortissement d'un choc sur le deuxième bord latéral principal (112) dans la zone d'un deuxième bord latéral secondaire (114) du plateau de table (110), et
- un élément d'amortissement (130, 131 ; 130', 131') étant formé par un corps d'amortissement compressible plastiquement configuré sous forme ondulée dans la direction linéaire, qui est introduit par complémentarité de forme dans une cavité étroite (132, 133 ; 132', 133') de la plateforme de support (140),
- une déformation plastique lors d'un processus de compression d'un corps d'amortissement (130, 131 ; 130', 131') n'ayant lieu qu'à partir d'une puissance définie prédéterminée d'une impulsion agissant sur un bord du plateau de table (110).

2. Dispositif table (100) selon la revendication 1, **caractérisé en ce qu'**un élément d'amortissement (130, 131 ; 130', 131') est fabriqué en une matière plastique élastique.

3. Dispositif table (100) selon l'une quelconque des revendications précédentes, **caractérisé en ce qu'**un élément d'amortissement (130, 131 ; 130', 131') est configuré sous forme étroite et est monté par complémentarité de forme dans une cavité étroite (132, 133 ; 132', 133') de la plateforme de support (140).

4. Dispositif table (100) selon l'une quelconque des revendications 1 à 3, **caractérisé en ce qu'**un élément d'amortissement (130, 131 ; 130', 131') est formé par un ressort à gaz, qui est introduit par complémentarité de forme dans une cavité étroite (132, 133 ; 132', 133') de la plateforme de support (140).

5. Dispositif table (100) selon l'une quelconque des revendications 1 à 3, **caractérisé en ce qu'**un élément d'amortissement (130, 131 ; 130', 131') est formé par un ressort hydraulique, qui est introduit par complémentarité de forme dans une cavité étroite (132, 133 ; 132', 133') de la plateforme de support (140).
